# EUROPÄISCHE PATENTSCHRIFT

(11) **EP 1 081 169 B1**
(45) Veröffentlichungstag und Bekanntmachung des Hinweises auf die Patenterteilung: **02.07.2003**
(21) Anmeldenummer: 00117880.5
(22) Anmeldetag: 19.08.2000
(51) Int. Cl.: C08F 290/04, B01F 17/00, C08F 226/06

(54) **Verzweigte, Imidazolgruppen enthaltende Polymere, sowie deren Herstellung und Verwendung**
Polymer ramifie contenant l'imidazole, sa preparation et utilisation
Imidazole containing polymers, preparation and use

(30) Priorität: 28.08.1999 DE 19941031
(43) Veröffentlichungstag der Anmeldung: 07.03.2001
(73) Patentinhaber: Byk-Chemie GmbH, 46483 Wesel (DE)
(72) Erfinder: Haubennestel, Karlheinz, 46487 Wesel (DE); Orth, Ulrich, Dr., 46485 Wesel (DE); Krappe, Udo, Dr., 46483 Wesel (DE); Gajewiak, Ulrich, 46539 Dinslaken (DE)
(74) Vertreter: Leifert, Elmar, Dr.

(56) Entgegenhaltungen:
- EP-A- 0 311 157
- US-A- 5 059 632
- US-A- 5 106 875
- US-A- 5 310 813
- US-A- 5 753 759

## Beschreibung

Die Erfindung betrifft verzweigte Polymere, welche im Stammpolymer Imidazolgruppen enthalten. Die Erfindung betrifft des weiteren ein Verfahren zur Herstellung dieser Polymere, sowie deren Verwendung als Dispergiermittel für organische und anorganische Pigmente oder Füllstoffe In organischen und wässrigen Systemen.

Um Feststoffe in flüssige Medien einbringen zu können, sind hohe mechanische Kräfte erforderlich. Es ist üblich Dispergiermittel einzusetzen, um diese Dispergierkräfte zu reduzieren und um den zur Deflockulierung der Feststoffteilchen notwendigen Gesamtenergieeintrag in das System und damit auch die Dispergierzeit so gering wie möglich zu halten. Bei diesen Dispergiermitteln handelt es sich um oberflächenaktive Stoffe, von anionischer, kationischer oder neutraler Struktur. Diese Stoffe werden in kleiner Menge entweder direkt auf den Feststoff aufgebracht oder dem Dispergiermedium zugesetzt. Bekannt ist weiterhin, dass es auch nach vollständiger Deflockulierung der Feststoffagglomerate in Primärteilchen, nach dem Dispergierprozess zu Reagglomerationen kommt, wodurch der Dispergieraufwand teilweise oder vollständig zunichte gemacht wird. Als Folge der unzulänglichen Dispergierung bzw. durch Reagglomeration kommt es zu unerwünschten Effekten wie z.B. Viskositätsanstieg in flüssigen Systemen, Farbtondrift und Glanzverluste in Lacken und Beschichtungen sowie Verringerung der mechanischen Festigkeit in Kunststoffen.

Eine Vielzahl verschiedener Substanzen findet heute als Dispergiermittel für Pigmente und Füllstoffe Verwendung. Ein Überblick über den diesbezüglichen Stand der Technik findet man in EP 0 318 999 (Seite 2, Zeile 24-26). Neben einfachen, niedermolekularen Verbindungen wie z.B. Lecithin, Fettsäuren und deren Salze und Alkylphenolethoxylaten werden auch komplexe Strukturen als Dispergiermittel eingesetzt. Hier sind es speziell amino- und amidfunktionelle Systeme, die breite Verwendung innerhalb der Dispergiermittel einnehmen. In der GB 2 153 804 werden z.B. amino- und amidfunktionelle Poly- und Oligocopolymere auf der Basis von (Poly)aminen und Polycaprolactonen zur Dispergierung von magnetischem Pigmenten eingesetzt. Die EP 0 713 894 beschreibt die Verwendung von aminofunktionellen Polylactonen für Überzüge und Druckfarben. Darüber hinaus beschreiben die EP 0 311 157 und US-PS 3 980 602 den Einsatz aminfunktioneller Polyacrylate zur Stabilisierung von organischen und anorganischen Pigmenten eingesetzt. Eine weitere Gruppe der Dispergiermittel stellen aminfunktionelle Polymere auf der Basis von Polyisocyanaten dar, wie in EP 0 159 678 und EP 0 438 836 beschrieben Aminfunktionelle Polymere mit Macromonomeranteil sind in der EP 732 346 offenbart.

Viele dieser Dispergiermittel zeigen bei ausreichender Pigment- bzw. Feststoffstabilisierung ein unzureichendes Vermögen die Viskosität bei der Einarbeitung von Pigmenten oder Feststoffteilchen in Bindemittel und Pigmentkonzentraten zu erniedrigen. Im Zuge der fortschreitenden Bemühungen umweltverträgliche Systeme zu erzeugen, besteht die Notwendigkeit, die Lösungsmittelmenge soweit wie möglich zu senken (z.B. high-solid und ultra-highsolid Lacke), oder ganz auf Lösungsmittel zu verzichten. Dies führt in der Regel zu Problemen bei der Produktion, da die Viskosität bei der Einarbeitung bzw. Dispergierung der Feststoffpartikel oftmals zu hoch ist. Insbesondere trifft dies auf die Herstellung von Pigmentkonzentraten zu, bei denen ein möglichst hoher Pigmentierungsgrad, bei gleichzeitig geringem Anteil an Bindemittel oder Lösungsmittel, erreicht werden soll.

Pigmentpasten entfalten nur dann ihren vollen Nutzen wenn sie möglichst universell, d.h. in vielen verschiedenen Bindemitteln, die sich in ihrer Polarität oft stark unterscheiden, eingesetzt werden können. Gerade die breite Verträglichkeit der Pigmentpasten ist mit den bislang verwendeten Dispergiermitteln nicht gewährleistet, so dass der Einsatz von Pastensystemen erheblich eingeschränkt ist. Neben dem Einsatz von Pigmentpasten in verschiedenen Bindemitteln muss auch die flokkulationsfreie Mischbarkeit der Pasten untereinander, sowie im Bindemittel gewährleistet sein.

Die oben vorgestellten Dispergiermittel stellen oft nur Teillösungen für dieses Problem dar. Aufgrund der Vielzahl der heute verwendeten anorganischen und organischen Pigmente und Füllmaterialien ist eine hinreichende Stabilisierung der zu dispergierenden Feststoffteilchen durch eine desorptionsstabile Belegung der Oberfläche nicht ausreichend gewährleistet. Somit kommt es zu Agglomerationen, da die notwendige effiziente sterische Abschirmung fehlt.

Bekannt ist, dass als Dispergiermittel Polyacrylsäureester mit sauren und basischen Gruppen eingesetzt werden, die auch versalzt sein können. Solche Produkte werden z. B. durch Polymerisation von entsprechenden monomeren Acrylsäureestern in Kombination mit Styrol, Acrylsäure und Dimethylaminoethylmethacrylat hergestellt. Bei diesen Polymeren können auch andere Monomere mit ethylenischen Doppelbindungen bei der Polymerisation mit eingesetzt werden, wie z. B. Vinylpyridin, Vinylimidazol und Alkylvinylether wie in der EP 0 311 157 und US-PS 3 980 602 beschrieben.

Es wurden aber auch schon Vorschläge in US-PS 5 770 646, US-PS 5 608 025, EP 0 781 820 und US-PS 5 714 538 gemacht, ethylenisch ungesättigte Macromonomere bei der Copolymerisation in Kombination mit anderen polymerisierbaren Monomeren, wie z. B. Acrylsäure und Dimethylaminoethylmethacrylat mit einzusetzen.

Der vorliegenden Erfindung lag zum einen die Aufgabe zugrunde, Dispergieradditive zu entwickeln, welche es ermöglichen Pigmentkonzentrate herzustellen, die bei einer möglichst hohen Pigmentkonzentration eine möglichst niedrigen Viskosität besitzen und die zum anderen Pigmentkonzentrate über einen langen Zeitraum viskositätsstabil halten und es ermöglichen, dass Mischungen solcher Pigmentkonzentrate mit anderen Pigmentkonzentraten keine Farbtondifferenzen beim "Rub-Out"-Test zeigen.

Überraschenderweise hat sich gezeigt, dass verzweigte Polymere, hergestellt aus ethylenisch ungesättigten Monomeren und Vinylimidazol im Stammpolymer und ethylenisch ungesättigten Macromonomeren als Seitenketten, diese Aufgaben lösen.

Um die erfindungsgemäßen Dispergiermittel herzustellen, werden ethylenisch ungesättigte Monomere, ethylenisch ungesättigte Macromonomere mit Molekulargewichten (MW) von 1000 - 20000, bevorzugt 5000 - 10000 und Imidazolgruppen enthaltende Monomere, nach bekannten Verfahren, bevorzugt radikalisch, copolymerisiert.

Als ethylenisch ungesättigte Verbindungen zur Herstellung des Stammpolymers werden z. B. Acrylsäure- und/oder Methacrylsäureester von geradkettigen oder verzweigten Alkoholen mit 1-22 C-Atomen, wie Methyl(meth)acrylat, Ethyl(meth)acrylat, n-, i- und t-Butyl(meth)acrylat, Lauryl(meth)acrylat, 2-Ethylhexyl(meth)acrylat, Stearyl(meth)acrylat, Behenyl(meth)acrylat eingesetzt. Auch cycloaliphatische (Meth)acrylate, wie z. B. Cyclohexyl(meth)acrylat und Isobomyl(meth)acrylat, können eingesetzt werden. Aralkyl(meth)acrylate wie Benzyl(meth)acrylat sind ebenfalls geeignet. (Meth)acrylsäureester mit Hydroxyfunktion können ebenfalls als Comonomere bei der Herstellung des Stammpolymeren mit eingesetzt werden, um z.B. eine Vemetzbarkeit des Dispergiermittels mit dem Bindemittel, in dem es später eingesetzt werden soll, zu ermöglichen. Solche Hydroxyester sind z. b. Hydroxyethyl(meth)acrylat und Hydroxypropyl(meth)acrylat. Andere geeignete ethylenisch ungesättigte Comonomere sind z. B. Styrol, α - Methylstyrol, Triethylenglycolmono(meth)acrylat, Acrylnitril, Methoxypolyethylenglycol(meth)acrylat, Butoxypropylenglycol(meth)acrylat, Ethylvinylether, Butylvinylether und Cyclohexylvinylether.

Die oben genannten ethylenisch ungesättigten Monomere werden einzeln oder in Kombination, in Abhängigkeit der gewünschten Bindemittelverträglichkeit, polymerisiert.

Erfindungswesentlich ist hierbei jedoch der zusätzliche Einbau von Imidazolgruppen im Stammpolymer, in Mengen von 5 bis 25 Gew.%, bevorzugt 10 bis 20 Gew.%. Als Imidazolgruppen enthaltendes Monomer wird Vinylimidazol bevorzugt.

Die als Seitenketten fungierenden Macromonomere können nach bekannten Verfahren, wie z. B. in US-P 5.770.646, US 5.310.813, Russian Chemical Reviews, 56 (8), 1987 und XXIV International Conference in Organic Coatings, July 6 - 10, 1998, Application of Graft Copolymers by Macromonomer method to 2-component polyurethane coatings (Kansai Paint Co. Ltd.) beschrieben, hergestellt werden.

Zur Herstellung der Macromonomeren eignen sich Meth(acryl)säureester von geradkettigen oder verzweigten Alkoholen mit 1-22 C-Atomen, wie Methyl(meth)acrylat, Ethyl(meth)acrylat, n- und i-Butyl(meth)acrylat, Lauryl(meth)acrylat, 2-Ethylhexyl(meth)acrylat, Stearyl(meth)acrylat, Behenyl(meth)acrylat. Weiterhin können cycloaliphatische (Meth)acrylate eingesetzt werden, wie z. B. Cyclohexyl(meth)acrylat und Isobomyl(meth)acrylat. Benzyl(meth)acrylat ist ebenfalls geeignet. Andere geeignete Monomere sind z. B. Styrol, α - Methylstyrol, Acrylnitril sowie Alkylvinylether, wie bereits weiter oben erwähnt. Es können jedoch auch Mischungen dieser Monomere eingesetzt werden.

Zusätzlich zu den Poly(meth)acrylaten mit endständiger (Meth)acrylfunktion sind aber auch andere Macromonomere als Comonomere geeignet. Bevorzugt sind die mono-vinylterminierten Polydimethylsiloxane, die man z.B. durch Reaktion von monohydroxyfunktionellen Polysiloxanen (z.B. erhältlich von Shin Etsu) mit (Meth)acrylsäure erhält.

Um sicherzustellen, dass diese Macromonomere im wesentlichen nur eine einzige ethylenisch ungesättigte Endgruppe tragen, sind spezielle Syntheseverfahren notwendig. Zum einen können diese mit Hilfe von sogenannten "chain transfer agents" hergestellt werden, wie in der US 5.770.646 beschrieben. Hierzu werden Cobalt-Komplexe in Konzentrationen von 5-1000 ppm eingesetzt. Bevorzugt sind z.B. Pentacyanocobaltat(II) oder Diaquabis(bordifluordimethylphenylglyoximato)-cobaltat(II). Die entsprechenden Co(III)-Komplexe finden gleichermaßen Verwendung. Die Polymerisation kann dann In Lösemitteln wie z.B. Aromaten, Ketonen, Acetaten, Alkoholen oder Glykolethern durchgeführt. Als Radikale erzeugende Initiatoren können die dem Fachmann bekannten Peroxo- und/oder AzoInitiatoren eingesetzt. Zum anderen können diese Macromonomere durch radikalische Polymerisation in Gegenwart einer mercaptofunktionellen Carbonsäure als Kettenregler, wie z.B. Mercaptoessigsäure oder Mercaptopropionsäure, hergestellt werden. Diese endständige Carboxylfunktion wird mit Glycidylmethacrylat zum methacrylfunktionellen, polymerisierbaren Macromonomeren weiter umgesetzt.

Hydroxyfunktionelle Kettenregler, wie z.B. Mercaptoethanol oder Mercaptopropanol, sind ebenfalls einsetzbar. Die unter Verwendung dieser Mittel erhaltenen Polymere tragen dann an einem Ende eine Hydroxyfunktion, die mit (Meth)acryloylchlorid weiter zum (Meth)acrylfunktionellen, polymerisierbaren Macromonomeren umgesetzt wird.

Die detaillierte Herstellung der Macromonomere ist In vorgenannten Patentschriften beschrieben.
Diese Macromonomere werden in den erfindungsgemäßen verzweigten Polymeren in Mengen von 2 - 25 Gew.%, bevorzugt 5 - 15 Gew.% eingesetzt.

Durch den Einsatz solcher Macromonomere in den erfindungsgemäßen Copolymeren können in gewissem Sinne Blockstrukturen hergestellt werden, wenn man nämlich unterschiedliche Monomere/Monomermischungen im Stammpolymer und im Macromer einsetzt. Derartige Blockstrukturen sind ansonsten nur mit speziellen Polymerisationsverfahren wie z.B. die "Group transfer polymerisation" zu erhalten.

Durch gezielte Auswahl der Monomere im Stammpolymer, wie auch im Macromonomer, kann man die Verträglichkeit der erfindungsgemäßen Polymeren mit Bindemitteln oder Lösungsmitteln beliebig anpassen und somit ein optimales Wirkungsspektrum erreichen.

Die Molekulargewichte der erfindungsgemäßen verzweigten Polymeren liegen im Bereich von 15.000 - 100.000, bevorzugt 25.000 - 75.000, besonders bevorzugt im Bereich von 30.000 - 50.000.

Die Imidazolgruppen der erfindungsgemäßen verzweigten Polymeren können auch versalzt werden. Als Versalzungskomponenten werden Monocarbonsäuren wie z.B. Essigsäure, Propionsäure, Stearinsäure, Ölsäure, Hydroxycarbonsäuren wie z.B. Ricinolfettsäure, Hydroxystearinsäure, Sulfonsäuren der allgemeinen Formel HOSO₂R¹, Schwefelsäureestem der allgemeinen Formel HOSO₃R¹, Polyoxyalkylenglykolmonoalkylether mono/di-Phosphorsäureester und Phosphorsäureester der allgemeinen Formel (OH)₃₋ₙ PO(OR²)ₙ mit n = 1oder 2 wie sie beschrieben sind in EP 0 417 490, sowie anorganische Säuren wie z.B. Phosphorsäure, eingesetzt.

Die Reste R¹ und R² sind dadurch gekennzeichnet, dass sie mindestens einen Alkyl-, Aryl- bzw. Aralkylrest mit mehr als 5-Kohlenstoffatomen und/oder eine Carbonsäureesterfunktion (-COO-) und/oder eine Urethangruppe (-NHCOO-) enthalten.

Die Herstellung der erfindungsgemäßen Polymeren mit Seitenketten erfolgt in für den Fachmann bekannter Weise mittels radikalischer Polymerisation in organischen Lösemitteln unter Verwendung von Radikalbildner (Initiatoren), wie z.B. Peroxiden oder Azo-Verbindungen.
Als Lösemittel kommen Ester wie z.B. Ethylacetat, n-Butylacetat oder 1-Methoxy-2-propylacetat in Frage sowie Alkohole wie z.B. Ethanol, i-Propanol, n-Butanol oder 1-Methoxy-2-propanol in Frage. Ebenso können aromatische Lösemittel wie z.B. Toluol, Xylol oder höhersiedenede Alkylbenzole eingesetzt werden. Auch der Einsatz anderer Lösemittel oder der Einsatz von Lösemittelgemischen ist denkbar, wobei sich die Wahl des Lösemittels oder der Lösemittel nach dem Einsatzzweck des erfindungsgemäßen Copolymeren richtet. Bevorzugt werden Ester eingesetzt, besonders bevorzugt ist 1-Methoxy-2-propylacetat.

Als Initiatoren kommen z.B. Peroxide wie tert.-Butylperoxobenzoat oder Dibenzoylperoxid in Frage. Es können aber auch z.B. Azo-Verbindungen wie Azoisobutyronitril (AIBN) eingesetzt werden. Bevorzugt werden Peroxide eingesetzt, besonders bevorzugt tert.-Butylperoxobenzoat.

Die Polymerisation wird bei Temperaturen von ca. 50°C bis 180°C bevorzugt bei 90°C bis 150°C besonders bevorzugt bei 110°C bis 130°C durchgeführt.

Der Einsatzbereich der erfindungsgemäßen Dispergiermittel erstreckt sich auf die aus dem Stand der Technik bekannten Einsatzgebiete. So können die erfindungsgemäßen Dispergiermittel z.B. bei der Herstellung von Pigmente und/oder Füllstoffe enthaltenden Lacken, Pasten und/oder Formmassen eingesetzt werden. Die Dispergiermittel können alleine oder in Kombination mit Bindemitteln eingesetzt werden. Neben dem Einsatz der erfindungsgemäßen Reaktionsprodukte als Dispergiermittel in flüssigen Phasen, ist auch die Beschichtung von pulver- oder faserförmigen Feststoffen mit den erfindungsgemäßen Polymeren Gegenstand dieser Erfindung. Derartige Beschichtungen von organischen wie auch anorganischen Feststoffen werden in bekannter Weise ausgeführt, wie sie z.B. in EP-A-0 270 126 beschrieben werden. Die auf diese Weise vorbehandelten Pigmente zeichnen sich durch leichtere Einarbeitbarkeit im Bindemittel sowie durch verbessertes Viskositäts-, Flockulations- und Glanzverhalten gegenüber nicht behandelten Pigmenten aus.

Die erfindungsgemäßen Dispergiermittel werden üblicherweise in einer Menge von 0,5 bis 100 Gew. %, bezogen auf den zu dispergierenden Feststoff, eingesetzt. Zur Dispergierung spezieller Feststoffe können aber durchaus wesentlich höhere Mengen der Dispergiermittel notwendig sein.
Die Menge an Dispergiermittel ist im wesentlichen abhängig von der zu belegenden Oberfläche des zu dispergierenden Feststoffes. Ruß benötigt z.B. wesentlich größere Mengen an Dispergiermittel als z.B. TiO₂. Beispiele für Pigmente oder Füllstoffe finden sich in EP-A-0 270 126. Desweiteren lassen sich auch mineralische Füllstoffe, z.B. Calciumcarbonat, Calciumoxid aber auch Flammschutzmittel wie z.B. Aluminium- oder Magnesiumhydroxid dispergieren.
Die Erfindung wird durch nachfolgende Beispiele zusätzlich erläutert. Bei molekular uneinheitlichen Substanzen stellen die angegebenen Molekulargewichte Durchschnittswerte des Zahlenmittels dar, die mittels Gel-Permeations-Chromatographie, mit PMMA als Standard, ermittelt wurden.

Sofern nicht anders ausgeführt handelt es sich bei Teilen um Gewichtsteile und bei Prozenten um Gewichtsprozente.
Die Herstellung der Methacrylat-funktionellen Macromonomeren erfolgte nach der gleichen im folgenden beschriebenen Methode. Exemplarisch wird die Herstellung des Methacrylat-funktionellen Poly-n-Butylmethacrylates beschrieben.

Es werden folgende Abkürzungen benutzt:
BMA: Butylmethacrylat
BA: Butylacrylat
PMA: Propylenglykolmonomethyletheracetat
HEMA: Hydroxyethylmethacrylat
BzMA: Benzylmethacrylat
2EHA: 2-Ethylhexylacrylat
DMAEMA: Dimethylaminoethylmethacrylat
Vl: Vinylimidazol
Al: Allylimidazol

### Herstellungsbeispiele:

### Herstellung eines Poly-n-Butylacrylat-Macromonomers (gemäß US 5.310.813)

86,5 Teile n-Butylacetat werden in einem Kolben mit Rückflußkühler, Thermometer, Rührer, Gaseinleitungsrohr und Tropftrichter vorgelegt, und unter Stickstoffatmosphäre zum Sieden gebracht. Unter Rückfluß wird eine Mischung aus 80 Teilen BA, 4,5 Teilen Mercaptopropionsäure als Kettenregler und 2 Teilen tert.-Butylperoxobenzoat als Polymerisationsinitiator innerhalb 3 Std. zudosiert. Nach beendeter Zugabe wird die Reaktion weitere 2 Std. durchgeführt. Man erhält ein Polymer mit terminaler Carboxyl-Funktion. Die Reaktionsmischung wird auf 90°C abgekühlt und 200 ppm Hydrochinonmonomethylether als Polymerisationsinhibitor zugeben. Dann werden 12 Teile Glycidylmethacrylat zugegeben und die Mischung weitere 6 Std. bei 90°C gehalten. Das so hergestellte Polymer enthält eine terminale Methacryl-Funktion, die zu weiterer Polymerisation befähigt ist.

Die in nachfolgender Tabelle beschriebenen Macromonomere sind in analoger Weise mit Glycidylmethacrylat hergestellt.

| | |
|---|---|
| Macromonomer 1 | Styrol / Acrylnitril 3:1 (MG: ca. 6000) |
| Macromonomer 2 | Poly-n-Butylacrylat (MG ca. 6000) |
| Macromonomer 3 | Butylmethacrylat / Hydroxyethylmethacrylat 1:1 (MG ca. 7000) |

Die Herstellung des methacrylfunktionellen Polydimethylsiloxans erfolgt durch Umsetzung eines monohydroxyfunktionellen Polydimethylsiloxans mit Methacrylsäure.

| | |
|---|---|
| Macromonomer 4 | Polydimethylsiloxan (MG ca. 30000) |
| Macromonomer 5 | Polydimethylsiloxan (MG ca. 6000) |

### Allgemeine Herstellung der Polymeren:

### Beispiele 1-18: Vergl.Beispiele 1+2

100 gr Propylenglykolmonomethyletheracetat werden unter Rühren auf 125 °C erhitzt. Die Monomermischung, nach Beispiel 1-18, und 1,5 gr tert-Butylperoxybenzoat werden innerhalb 90Minuten dem vorgelegten Propylenglykolmonomethyletheracetat zugetropft und weitere 5 h gerührt. Danach ist die Reaktion beendet.

| **Beispiele 1-18:** | | | | |
|---|---|---|---|---|
| | Monomere / Gew. % | Macromonomer | Mol-Gewicht (Mn) | Uneinheitlichkeit (Mw/Mn) |
| Vergl.Beispiel | BMA / 85% | Macromonomer 1 | 33.400 | 6,3 |
| 1 | DMAEMA / 10% | 5% | | |
| Vergl.Beispiel | BMA / 90% | - | 31.200 | 5,9 |
| 2 | VI / 10% | | | |
| Beispiel 1 | BMA / 85% | Macromonomer 2 | 31.600 | 7,5 |
| | VI / 10% | 5% | | |
| Beispiel 2 | BMA / 85% | Macromonomer 3 | 29.850 | 6,2 |
| | VI / 10% | 5% | | |
| Beispiel 3 | BMA / 85% | Macromonomer 1 | 36.200 | 9,1 |
| | VI / 10% | 5% | | |
| Beispiel 4 | BMA / 75% | Macromonomer 1 | 29.850 | 6,2 |
| | VI / 10% | 5% | | |
| | HEMA / 10% | | | |
| Beispiel 5 | BMA / 75% | Macromonomer 2 | 40.100 | 5,6 |
| | VI / 10% | 5% | | |
| | HEMA / 10% | | | |
| Beispiel 6 | BMA / 78% | Macromonomer 1 | 29.850 | 6,2 |
| | VI / 10% | 2% | | |
| | HEMA / 10% | | | |
| Beispiel 7 | BMA / 85% | Macromonomer 2 | 37.600 | 7,5 |
| | VI / 10% | 5% | | |
| Beispiel 8 | BMA / 56,7% | Macromonomer 1 | 32.750 | 6,8 |
| | VI / 10% | 5% | | |
| | EHA / 28,3% | | | |
| Beispiel 9 | BMA / 85% | Macromonomer 4 | 33.900 | 8,1 |
| | VI / 10% | 5% | | |
| Beispiel 10 | BMA / 42,5% | Macromonomer 1 | 38.250 | 8,1 |
| | VI / 10% | 5% | | |
| | BzMA / 42,5% | | | |
| Beispiel 11 | BMA / 80% | Macromonomer 1 | 45.350 | 8,6 |
| | VI / 10% | 10% | | |
| Beispiel 12 | BMA / 65% | Macromonomer 1 | 5.580 | 9,2 |
| | VI / 10% | 25% | | |
| Beispiel 13 | BMA / 70% | Macromonomer 1 | 32.100 | 8,4 |
| | VI / 15% | 5% | | |
| | HEMA / 10% | | | |
| Beispiel 14 | BMA / 75% | Macromonomer 1 | 35.200 | 9,2 |
| | VI / 20% | 5% | | |
| Beispiel 15 | BMA / 85% | Macromonomer 5 | 36.900 | 8,2 |
| | VI / 10% | 5% | | |
| Beispiel 16 | BA / 60% | Macromonomer 2 | 45.250 | 9,3 |
| | VI / 25% | 15% | | |
| Beispiel 17 | EHA / 75% | Macromonomer 1 | 38.500 | 7,6 |
| | VI / 20% | 5% | | |
| Beispiel 18 | BMA / 80% | Macromonomer 2 | 42.300 | 8,8 |
| | AI / 10% | 10% | | |

### Verwendungsbeispiele

Zur Beurteilung der erfindungsgemäßen Verbindungen wurden Pigmentkonzentrate ohne zusätzliches Bindemittel hergestellt, und die Pigmentstabilisierung in einer Weißabmischung anhand des "Rub-Out" - Wertes als ΔE beurteilt. Hierbei werden Farbdifferenzen beurteilt, die durch nicht ausreichende Pigmentstabilisierung hervorgerufen werden. Je kleiner der ΔE-Wert, desto besser ist die Pigmentstabilisierung der Abmischung.

Zur Herstellung der Pigmentpasten werden die Rohstoffe und die zur Vermahlung notwendigen Glasperlen nacheinander in ein 500ml Metallgefäß eingewogen und dann mit einer 40 mm Teflonscheibe bei 40°C dispergiert.
Die dispergierten Pasten werden über ein Papiersieb (Maschenweite 80µm) abgesiebt, und in Glasflaschen abgefüllt. Man erhält fließfähige Pigmentpasten mit sehr guten rheologischen Eigenschaften.

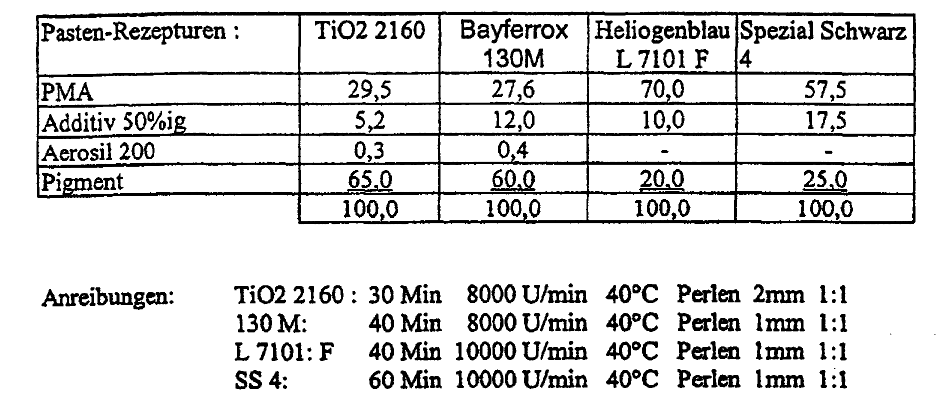

| **Klarlackformulierungen:** | |
|---|---|
| 2K - Acrylat: | |
| Macrynal SM | 75,0 |
| 510 | |
| (Fa. Hoechst) | |
| PMA | 5,0 |
| Solvesso 100 | 5,0 |
| Xylol | 6,4 |
| Butytacetat | 8,0 |
| Byk 306 | 0,1 |
| Byk 066 | 0,5 |

| Härterlösung | |
|---|---|
| Desmodur N | 50,0 |
| 3390 | |
| (Fa. Bayer) | |
| Xylol | 35,0 |
| Butylacetat | 15,0 |

Klarlack : Härterlösung 2 : 1

| | | | | |
|---|---|---|---|---|
| **Auflackung** | Klarlack | 69,3 | 64,7 | 68,4 |
| | Weisspaste | 30,7 | 28,6 | 30,3 |
| | Buntpaste | - | 6,7 | - |
| | Schwarzpaste | - | - | 1,3 |
| | | 100,0 | 100,0 | 100,0 |

### 2K - Acrylat System: SM510 / N3390:

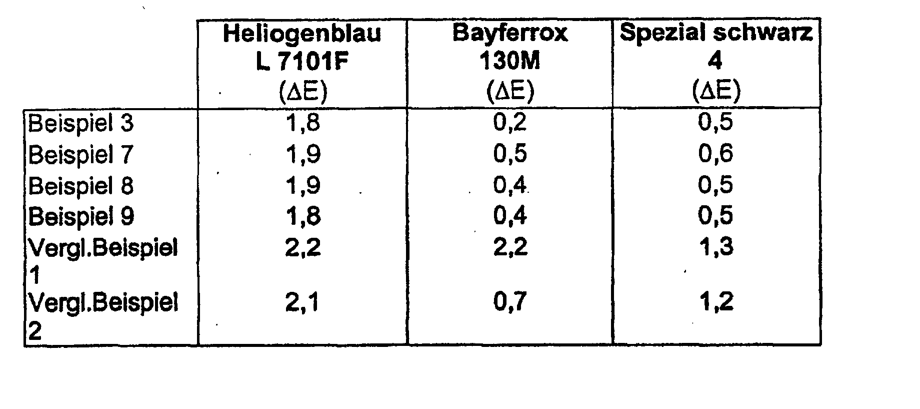

## Patentansprüche

1. Verzweigtes Polymer, **dadurch gekennzeichnet, dass** es sich aus folgender Monomerenmischung ableitet:
(A) 50 bis 93 Gew.-% wenigstens eines ethylenisch ungesättigten Monomers,
(B) 2 bis 25 Gew.-% wenigstens eines ethylenisch ungesättigten Macromonomers mit einem Molekulargewicht von 1.000 bis 20.000 und
(C) 5 bis 25 Gew.-% wenigstens eines polymerisierbaren Imidazolderivats, wobei, Komponenten (A), (B) und (C) zusammen 100 Gew.-% ergeben, das Polymer ein Molekulargewicht von 15.000 bis 100.000 besitzt und gegebenenfalls in Salzform vorliegt.

2. Verzweigtes Polymer gemäß Anspruch 1, wobei Komponente (B) in einer Menge von 5 bis 15 Gew.-% und Komponente (C) in einer Menge von 10 bis 20 Gew.-% vorliegt.

3. Verzweigtes Polymer gemäß einem oder mehreren der Ansprüche 1 und 2, wobei das Molekulargewicht des Polymeren 25.000 bis 75.000, vorzugsweise 30.000 bis 50.000 beträgt.

4. Verzweigtes Polymer gemäß einem oder mehreren der Ansprüche 1 bis 3, wobei Komponente (A) gegebenenfalls ein Hydroxyalkyl- oder ein Alkylpolyalkylenglykol- Acryl- oder Methacrylsäureester, ein Styrol oder dessen Derivat oder ein Vinylether ist und Komponente (B) ein Poly(meth)acrylat mit endständiger (Meth)acrylfunktion oder ein monovinylterminiertes Polydimethylsiloxan ist und Komponente (C) N-Vinylimidazol ist.

5. Verzweigtes Polymer gemäß einem oder mehreren der Ansprüche 1 bis 4, wobei dieses als Salz einer Fettsäure, einer Hydroxycarbonsäure, einer Sulfonsäure, eines Schwefelsäureesters, eines sauren Phosphorsäureesters oder einer anorganischen Säure vorliegt.

6. Verfahren zur Herstellung eines verzweigten Polymers, **dadurch gekennzeichnet, dass**
(A) 50 bis 93 Gew.-% wenigstens eines ethylenisch ungesättigten Monomers,
(B) 2 bis 25 Gew.-% wenigstens eines ethylenisch ungesättigten Macromonomers mit einem Molekulargewicht von 1.000 bis 20.000 und
(C) 5 bis 25 Gew.-% wenigstens eines polymerisierbaren Imidazolderivats, in Gegenwart eines organischen Lösemittels und mindestens eines Radikalstarters, bei einer Temperatur von 50 bis 180°C, radikalisch polymerisiert werden und gegebenenfalls eine Umsetzung des so erhaltenen Polymers in dessen Salze erfolgt.

7. Verfahren gemäß Anspruch 6, **dadurch gekennzeichnet, dass** das organische Lösemittel ein Ester ist und der Radikalstarter ein Peroxid oder eine Azoverbindung ist.

8. Verfahren gemäß einem oder mehreren der Ansprüche 6 und 7, **dadurch gekennzeichnet, dass** die Reaktionstemperatur 90 bis 150°C beträgt.

9. Verwendung der Polymere, aus einem oder mehreren der Ansprüche 1 bis 5, als Dispergiermittel zur Herstellung von Pigmente und/oder Füllstoffe enthaltenden Lacke und/oder Pasten und/oder Formmassen, gegebenenfalls in Kombination mit Bindemitteln.

10. Verwendung der Polymere, aus einem oder mehreren der Ansprüche 1 bis 5, zur Beschichtung von pulver- oder faserförmigen Feststoffen.

11. Verwendung gemäß einem oder mehreren der Ansprüche 9 und 10, **dadurch gekennzeichnet, dass** das verzweigte Polymer in einer Menge von 0,5 bis 100 Gew.-% bezüglich des zu dispergierenden Feststoffes eingesetzt wird.

## Claims

1. Branched polymer, **characterised in that** it is derived from the following mixture of monomers:
(A) 50 to 93 wt.% of at least one ethylenically unsaturated monomer,
(B) 2 to 25 wt.% of at least one ethylenically unsaturated macromonomer with a molecular weight of 1,000 to 20,000 and
(C) 5 to 25 wt.% of at least one polymerisable imidazole derivative,
wherein components (A), (B) and (C) together make up 100 wt.%, the polymer possesses a molecular weight of 15,000 to 100,000 and is optionally present in the form of a salt.

2. Branched polymer according to claim 1, wherein component (B) is present in a quantity of 5 to 15 wt.% and component (C) in a quantity of 10 to 20 wt.%.

3. Branched polymer according to one or more of claims 1 and 2, wherein the molecular weight of the polymer is 25,000 to 75,000, preferably 30,000 to 50,000.

4. Branched polymer according to one or more of claims 1 to 3, wherein component (A) is optionally a hydroxyalkyl or an alkyl polyalkylene glycol acrylate or methacrylate, a styrene or derivative thereof or a vinyl ether and component (B) is a poly(meth)acrylate with terminal (meth)acrylic function or a monovinyl-terminated polydimethylsiloxane and component (C) is N-vinylimidazole.

5. Branched polymer according to one or more of claims 1 to 4, wherein this is present as a salt of a fatty acid, a hydroxycarboxylic acid, a sulfonic acid, a sulfate, an acidic phosphate or an inorganic acid.

6. Process for the production of a branched polymer, **characterised in that**
(A) 50 to 93 wt.% of at least one ethylenically unsaturated monomer,
(B) 2 to 25 wt.% of at least one ethylenically unsaturated macromonomer with a molecular weight of 1,000 to 20,000 and
(C) 5 to 25 wt.% of at least one polymerisable imidazole derivative
are polymerised by free-radical polymerisation in the presence of an organic solvent and at least one radical initiator, at a temperature of 50 to 180°C, and the polymer thus obtained is optionally converted to its salt.

7. Process according to claim 6, **characterised in that** the organic solvent is an ester and the radical initiator is a peroxide or an azo compound.

8. Process according to one or more of claims 6 and 7, **characterised in that** the reaction temperature is 90 to 150°C.

9. Use of the polymers from one or more of claims 1 to 5 as dispersing agents for the production of paints and/or pastes and/or moulding compositions containing pigments and/or fillers, optionally in combination with binders.

10. Use of the polymers from one or more of claims 1 to 5 for the coating of powdered or fibrous solids.

11. Use according to one or more of claims 9 and 10, **characterised in that** the branched polymer is used in a quantity of 0.5 to 100 wt.%, based on the solid to be dispersed.

## Revendications

1. Polymère ramifié **caractérisé en ce qu'**il est issu du mélange de monomères suivant :
(A) 50 à 93% en poids d'au moins un monomère éthyléniquement insaturé,
(B) 2 à 25% en poids d'au moins un macromonomère éthyléniquement insaturé présentant un poids moléculaire de 1000 à 20000, et
(C) 5 à 25% en poids d'au moins un dérivé imidazole polymérisable, les composants (A), (B) et (C) représentant ensemble 100% en poids, le polymère présentant un poids moléculaire de 15000 à 100000 et se trouvant le cas échéant sous forme de sel.

2. Polymère ramifié selon la revendication 1, le composant (B) se trouvant en une quantité de 5 à 15% en poids et le composant (C) en une quantité de 10 à 20% en poids.

3. Polymère ramifié selon l'une ou plusieurs des revendications 1 et 2, dont le poids moléculaire est de 25000 à 75000, de préférence de 30000 à 50000.

4. Polymère ramifié selon l'une ou plusieurs des revendications 1 à 3, dans lequel le composant (A) est le cas échéant un ester de l'acide acrylique ou méthacrylique d'hydroxyalkyle ou d'alkylpolyalkylèneglycol, un styrène ou son dérivé ou un vinyléther et le composant (B) est un poly(méth)acrylate avec une fonction (méth)acryle en position terminale ou un polydiméthylsiloxane terminé par monovinyle et le composant (C) est du N-vinylimidazole.

5. Polymère ramifié selon l'une ou plusieurs des revendications 1 à 4, celui-ci se trouvant sous forme d'un sel avec un acide gras, un acide hydroxycarboxylique, un acide sulfonique, un ester de l'acide sulfurique, un ester acide de l'acide phosphorique ou un acide inorganique.

6. Procédé pour la préparation d'un polymère ramifié, **caractérisé en ce qu'**on polymérise par voie radicalaire
(A) 50 à 93% en poids d'au moins un monomère éthyléniquement insaturé,
(B) 2 à 25% en poids d'au moins un macromonomère éthyléniquement insaturé présentant un poids moléculaire de 1000 à 20000, et
(C) 5 à 25% en poids d'au moins un dérivé imidazole polymérisable,
en présence d'un solvant organique et d'au moins un initiateur radicalaire, à une température de 50 à 180°C et on procède le cas échéant à une transformation du polymère ainsi obtenu en son sel.

7. Procédé selon la revendication 6, **caractérisé en ce que** le solvant organique est un ester et l'initiateur radicalaire un peroxyde ou un composé azo.

8. Procédé selon l'une ou plusieurs des revendications 6 et 7, **caractérisé en ce que** la température de réaction est de 90 à 150°C.

9. Utilisation du polymère de l'une ou plusieurs des revendications 1 à 5 comme dispersant pour la préparation de laques et/ou de pâtes et/ou de masses de moulage contenant des pigments et/ou des charges, le cas échéant en combinaison avec des liants.

10. Utilisation du polymère de l'une ou plusieurs des revendications 1 à 5 pour le revêtement de solides en forme de poudre ou de fibres.

11. Utilisation selon l'une ou plusieurs des revendications 9 et 10, **caractérisée en ce que** le polymère ramifié est utilisé en une quantité de 0,5 à 100% en poids par rapport au solide à disperser.
